# EUROPÄISCHE PATENTANMELDUNG

(11) **EP 1 005 248 A2**
(43) Veröffentlichungstag der Anmeldung: **31.05.2000**
(21) Anmeldenummer: 99122497.3
(22) Anmeldetag: 11.11.1999
(51) Int. Cl.: H04Q 11/04

(54) **Vorrichtung und Verfahren zum Konvertieren von unterschiedlichen Datenformaten**

(30) Priorität: 27.11.1998 DE 19854882
(71) Anmelder: SIEMENS AKTIENGESELLSCHAFT, 80333 München (DE)
(72) Erfinder: Baier, Thomas, 85551 Kirchheim (DE); Gassner, Markus, 83374 Traunwalchen (DE); Schellin, Ulf Dr., 81477 München (DE); Streb, Siegfried, 85661 Forstinning (DE); Schaefer, Frank, 81369 München (DE); Schmeh, Alexander, 85777 Fahrenzhausen (DE); Stadick, Bettina, 85368 Moosburg (DE)

(57) **Zusammenfassung**

Die Erfindung betrifft eine Vorrichtung und ein Verfahren zum Konvertieren von Datenformaten zwischen einer Schnittstelle (S1) für digitale leitungsvermittelte Netze und einer Schnittstelle (S2) für serielle Bussysteme mit virtuellen Kanälen, wobei die zu konvertierenden Daten transparent durchgeschaltet werden. Die Daten eines Signalisierungskanals des digitalen leitungsvermittelten Netzes werden hierbei einem gesicherten Kanal (CP) des seriellen Bussystems mit virtuellen Kanälen zugeordnet. Andererseits werden die Daten der Nutzkanäle (B1, B2) des digitalen leitungsvermittelten Netzes den Daten der ungesicherten Kanäle (IsoP) im seriellen Bussystem zugeordnet. Dadurch ergibt sich eine besonders einfache und kostengünstige Realisierung der Konvertierungsvorrichtung.

## Beschreibung

Die Erfindung bezieht sich auf eine Vorrichtung und ein Verfahren zum Konvertieren von unterschiedlichen Datenformaten und insbesondere auf eine Vorrichtung und ein Verfahren zum Konvertieren von Datenformaten zwischen einer Schnittstelle für digitale leitungsvermittelte Netze und einer Schnittstelle für serielle Bussysteme mit virtuellen Kanälen.

Mit dem Einzug der Multimediatechnik besteht in zunehmendem Maße der Bedarf nach Schnittstellenkonvertern, die zwischen Schnittstellen für Rechnersysteme bzw. Netzwerke und Schnittstellen in der Telekommunikation geschaltet werden. Neuartige Schnittstellen für Rechnersysteme bzw. PCs stellen serielle Bussysteme mit virtuellen Kanälen dar, die den Anschluß von verschiedenen Peripheriegeräten an das Rechnersystem bzw. den PC ermöglichen. Der Vorteil derartiger Schnittstellen für serielle Bussysteme mit virtuellen Kanälen liegt insbesondere darin, daß zusätzliche Peripheriegeräte während des Betriebs des Rechnersystems bzw. PCs angeschlossen werden können (Hot-Plugfähig), wodurch die Notwendigkeit eines Einbaus von PC-Karten in dafür vorgesehene "Einschübe" und die dadurch hervorgerufene Neukonfiguration des Systems entfällt.

Rechnersysteme bzw. PCs die mit einer vorstehend beschriebenen Schnittstelle ausgestattet sind, werden demgegenüber automatisch konfiguriert, sobald ein zusätzliches Peripheriegerät physikalisch angeschlossen wird, wobei ein Neustart oder 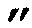 set up" des Rechnersystems bzw. PCs nicht notwendig ist. Die bekanntesten Schnittstellen für serielle Bussysteme mit virtuellen Kanälen sind derzeit die USB-Schnittstelle (Universal Serial Bus) und die sogenannte Fire Wire-Schnittstelle. Die maximale Datenübertragungsrate der USB-Schnittstelle beträgt hierbei 12 Mbit/sec, wobei bis zu 127 Peripheriegeräte (Monitor, Tastatur, Drucker usw.) angeschlossen werden können. Die Fire Wire-Schnittstelle (IEEE 1394) besitzt demgegenüber eine wesentlich höhere Datenübertragungsrate und zielt auf Peripheriegeräte mit hoher Bandbreite (z. B. digitale Camcorder, Kameras und digitale Video-CD-Spieler).

Ein wesentliches Merkmal dieser neuartigen Schnittstellen, die ein Anschließen von Peripheriegeräten ohne erneutes Initialisieren des Rechnersystems ermöglichen, ist insbesondere die Verwendung von virtuellen Kanälen in einer seriellen Busstruktur. Im einzelnen besitzt eine derartige Schnittstelle für serielle Bussysteme mit virtuellen Kanälen lediglich einen nachfolgend als Steuerkanal bezeichneten fest vorgegebenen Kanal (default control pipe), welcher die jeweiligen Peripheriegeräte mit dem Rechnersystem verbindet und die Steuerung beim Anschließen neuer Peripheriegeräte übernimmt. Darüber hinaus werden eine Vielzahl von zusätzlichen Datenkanälen (Pipes) vom Peripheriegerät individuell erzeugt bzw. festgelegt, wodurch eine optimal angepaßte Verbindung zwischen dem Rechnersystem (host) und dem Peripheriegerät (device) aufgebaut wird.

Gemäß der vorliegenden Erfindung handelt es sich bei dem Peripheriegerät um einen sogenannten Schnittstellenkonverter, der eine Anpassung zwischen der vorstehend beschriebenen Schnittstelle für serielle Bussysteme mit variablen Kanälen (USB, Fire Wire) und einer Schnittstelle für digitale leitungsvermittelte Netze realisiert, wie sie in der Telekommunikation verwendet werden.

Typische Anwendungsfälle derartiger digitaler leitungsvermittelter Netze sind beispielsweise das ISDN (Integrated Services Digital Network) sowie eine Vielzahl von weiteren Schnittstellen für digitale leitungsvermittelte Netze. Ein derartiger Schnittstellenkonverter besitzt demzufolge die Aufgabe die vom digitalen leitungsvermittelten Netz ankommenden Daten aufzunehmen und in ein derartiges Datenformat umzuwandeln, um sie anschließend im seriellen Bussystem mit den virtuellen Kanälen ohne Datenverlust weiter zuleiten. In gleicher Weise werden die Daten auch in umgekehrter Richtung aufgenommen, umgewandelt und weitergeleitet.

Herkömmliche Schnittstellenkonverter bilden demzufolge im Peripheriegerät einen kompletten Netzabschluß (Terminaladapter) für das digitale leitungsvermittelte Netz nach, extrahieren die Nutzdaten aus den jeweiligen Kanälen des digitalen leistungsvermittelten Netzes und geben diese anschließend an die Schnittstelle für serielle Bussysteme mit virtuellen Kanälen weiter. Diese Endkopplung der Schnittstellen benötigt jedoch einen außerordentlich aufwendigen Hardware- und Softwareaufwand im Peripheriegerät bzw. im Schnittstellenkonverter, weshalb derartige herkömmliche Schnittstellenkonverter in der Entwicklung und Herstellung teuer sind.

Der Erfindung liegt daher die Aufgabe zugrunde eine Vorrichtung und ein Verfahren zum Konvertieren von Datenformaten zwischen einer Schnittstelle für digitale leitungsvermittelte Netze und einer Schnittstelle für serielle Bussysteme mit virtuellen Kanälen zu schaffen, die einen einfachen Aufbau besitzt und kostengünstig herzustellen ist.

Hinsichtlich der Vorrichtung wird diese Aufgabe mit den im Patentanspruch 1 angegebenen Merkmalen gelöst.

Hinsichtlich des Verfahrens wird die vorliegende Aufgabe mit den im Patentanspruch 11 angegebenen Maßnahmen gelöst.

Insbesondere durch die Verwendung einer Zuordnungsvorrichtung mit der die Daten des Signalisierungskanals im leitungsvermittelten Netz den Daten des gesicherten Kanals im seriellen Bus und die Daten der Nutzkanäle im leitungsvermittelten Netz den Daten der ungesicherten Kanäle im seriellen Bus zugeordnet werden, ergibt sich ein äußerst einfacher Aufbau, wobei nahezu alle Daten des digitalen leitungsvermittelten Netzes sozusagen unbehandelt, d.h. transparent, an das Rechnersystem bzw. den PC durchgegeben werden. Der Netzabschluß des digitalen leitungsvermittelten Netzes wird somit direkt vom Rechnersystem realisiert. Da der Signalisierungskanal des digitalen leitungsvermittelten Netzes dem gesicherten Steuerkanal (default control pipe) des seriellen Bussystems zugeordnet wird und demzufolge diese sensitiven Daten im Signalisierungskanal des Netzes im seriellen Bussystem gesichert übertragen werden, kann der Aufwand im Peripheriegerät zur Datensicherung und Konvertierung außerordentlich verringert werden.

Vorzugsweise werden zur Übertragung der Nutzkanäle im seriellen Bussystem unidirektionale isochrone Kanäle verwendet, wobei dem ausgehenden Datenstrom in Richtung zum Rechnersystem bzw. PC ein Regelungsbyte hinzugefügt wird, uni den eingehenden Datenstrom im zugehörigen unidirektionalen Kanal entsprechend zu regeln. Dadurch können Asynchronitäten zwischen dem seriellen Bussystem und dem digitalen leitungsvermittelten Netz ausgeglichen werden.

Die Zuordnungsvorrichtung besitzt vorzugsweise einen Pufferspeicher zum wechselseitigen Auslesen und Abspeichern der zu konvertierenden Daten aus den jeweiligen Schnittstellen, wobei ein Schwellwertentscheider feststellt, ob sich die Anzahl der abgespeicherten Daten in einem vorbestimmten Bereich aufhält. Über- oder unterschreitet diese Anzahl der abgespeicherten Daten den vorbestimmten Bereich, so wird das im isochronen Kanal ausgesendete Regelbyte entsprechend verändert. Ein Datenverlust kann dadurch zuverlässig verhindert werden, wobei der Hardwareaufwand minimal ist.

Durch die Verwendung eines Ereignis-Kanals im seriellen Bussystem können die in digitalen leitungsvermittelten Netzen auftretenden Ereignisse mit geringer Verzögerung an das Rechnersystem bzw. dem PC weitergegeben werden, wodurch eine weitere Vereinfachung des Aufbaus im Schnittstellenkonverter möglich ist. Darüber hinaus können im Steuerkanal des seriellen Bussystems weitere Daten an den Schnittstellenkonverter übertragen werden, wodurch eine Anpassung bei möglicherweise auftretenden Inkompatibilitäten von Schnittstellensteuerungen unterschiedlicher Hersteller ermöglicht wird.

Die Erfindung wird nachstehend an Hand eines Ausführungsbeispiels unter Bezugnahme auf die Zeichnung näher beschrieben.

Es zeigen:
- Fig. 1: eine Blockdarstellung eines Schnittstellenkonverters gemäß einem Ausführungsbeispiel der Erfindung,
- Fig. 2: eine schematische Darstellung eines Gesamtsystems mit dem Schnittstellenkonverter gemäß Fig. 1, und
- Fig. 3: eine Darstellung der Funktionsblöcke im Schnittstellenkonverter gemäß Fig. 1,

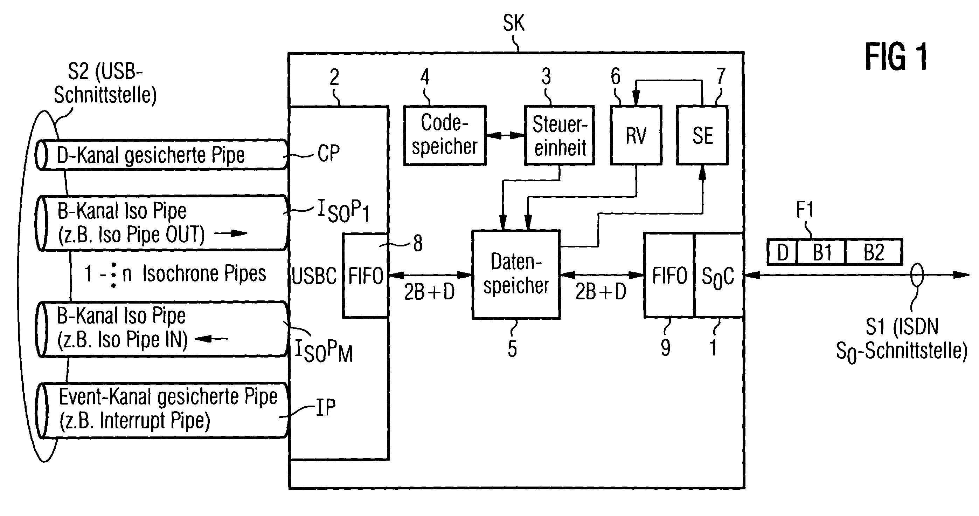

Fig. 1 zeigt eine Blockdarstellung eines Schnittstellenkonverters gemäß einem Ausführungsbeispiel der vorliegenden Erfindung.

Das Bezugszeichen SK bezeichnet einen Schnittstellenkonverter, der Datenformate zwischen einer ersten Schnittstelle S1 und einer zweiten Schnittstelle S2 konvertiert bzw. umwandelt, wobei die zu konvertierenden Daten transparent durchgeschaltet werden. Die erste Schnittstelle S1 ist ein digitales leitungsvermitteltes Netz und besteht gemäß Fig. 1 aus einer ISDN-S₀-Schnittstelle. Ein derartiges digitales leitungsvermitteltes Netz besitzt im wesentlichen ein Datenformat F1.

Das Datenformat F1 besteht im wesentlichen aus einem D-Kanal bzw. Signalisierungskanal, der Daten im Signalisierungskanal (Telefonnummer, Gebühreneinheiten, usw.) überträgt, wie sie beispielsweise von einem Zeichengabenetz benötigt werden, um gegebenenfalls eine Verbindung in einem übergeordneten Nutzkanalnetz herzustellen. Ein B1- und B2-Kanal bezeichnet den Nutzkanal des digitalen leitungsvermittelten Netzes, in dem beispielsweise Sprachdaten übertragen werden. Bei der dargestellten ISDN-S₀-Schnittstelle beträgt die Bandbreite für die Nutzkanäle B1 und B2 jeweils 64 Kilobit pro Sekunde, während die Bandbreite des Signalisierungskanals D 16 Kilobit pro Sekunde beträgt.

Das Bezugszeichen 1 bezeichnet eine erste Schnittstellensteuerung und stellt einen Abschluß für die erste Schnittstelle S1 dar. Bei der in Fig. 1 dargestellten S₀-Schnittstelle kann beispielsweise der Siemens-ISDN-Controller IPAC verwendet werden. Es kann jedoch auch jede weitere Schnittstellensteuerung verwendet werden, die die Leitungsprotokolle für die erste Schnittstelle S1 realisiert. Die erste Schnittstellensteuerung 1 besitzt eine erste Zwischenspeichervorrichtung 9, die in Form eines FIFOs (First In First Out) die von der ersten Schnittstelle S1 eingehenden Datenströme, bzw. auf diese auszugebenden Datenströme, zwischenspeichert. Im wesentlichen sind dies die Daten der beiden Nutzkanäle B1 und B2 sowie des Signalisierungskanals D. Diese Daten (2B+D) werden nunmehr in einem Pufferspeicher 5 abgelegt, der vorzugsweise aus einem Schreiblesespeicher (RAM) besteht.

Für die zweite Schnittstelle S2 besitzt der Schnittstellenkonverter SK in ähnlicher Weise eine zweite Schnittstellensteuerung 2, die ebenfalls eine zweite Zwischenspeichervorrichtung 8 in Form eines FIFOs aufweist. Da die zweite Schnittstelle S2 im Ausführungsbeispiel gemäß Fig. 1 eine USB-Schnittstelle (Univeral Serial Bus) darstellt, besteht sie aus einer Vielzahl von virtuellen Kanälen. Die Zusammensetzung dieser virtuellen Kanäle wird vom Schnittstellenkonverter SK nunmehr auf besonders vorteilhaft Weise festgelegt bzw. erzeugt, wie nachfolgend beschrieben werden soll.

Gemäß der vorliegenden Erfindung definiert der Schnittstellenkonverter SK neben einem fest vorgegeben Steuerkanal CP (default control pipe) zumindest zwei isochrone Kanäle IsoP₁-IsoPₙ zum. Übertragen der Nutzkanaldaten B1 und B2 der ersten Schnittstelle S1. Da in der USB-Schnittstelle S2 die isochronen Kanäle (isochrone pipes) unidirektional Datenkanäle darstellen, werden bei einer Schnittstellenkonvertierung von USB auf S₀ (und umgekehrt) vier isochrone Kanäle IsoP₁-IsoP₄ verwendet. Hierbei werden für jeden Nutzkanal B1 und B2 der S₀-Schnittstelle und für jede Richtung jeweils ein isochroner Kanal verwendet. Es können jedoch auch mehr isochrone Kanäle oder lediglich zwei isochrone Kanäle in der zweiten Schnittstelle S2 verwendet werden, wobei im zuletzt genannten Fall die Nutzkanaldaten von B1 und B2 jeweils in einen ein- und einen ausgehenden isochronen Kanal nacheinander abgelegt werden. Die Daten des Signalisierungskanals D der ersten Schnittstelle S1 werden ausschließlich auf dem gesicherten Steuerkanal CP übertragen. Die Steuerung des Schnittstellenkonverters SK erfolgt über eine Zentraleinheit 3 wie z.B. eine Steuereinheit (CPU, FPAG, ASIC, usw.) entsprechend einem in einem Festspeicher 4 wie z.B. einem Codespeicher (ROM, FLASH, buffered RAM, usw.) abgelegten Steuerprogramm.

Der wesentliche Vorteil des erfindungsgemäßen Schnittstellenkonverters ergibt sich insbesondere aus der Tatsache, daß die sensitiven Daten im Signalisierungskanal der ersten Schnittstelle S1 im gesicherten Steuerkanal CP der zweiten Schnittstelle S2 übertragen werden, wohingegen die Daten der Nutzkanäle B1 und B2 der ersten Schnittstelle S1 transparent auf die ungesicherten isochronen Kanäle der zweiten Schnittstelle S2 gelegt werden. Da die isochronen Kanäle IsoP₁-IsoPₙ virtuelle Kanäle mit einer außerordentlich hohen Datenrate darstellen, können die ein- und ausgehenden Daten der Nutzkanäle B1 und B2 über den Pufferspeicher 5 auf einfache Weise durchgeschaltet werden. Auf eine Datensicherung wird hierbei bewußt verzichtet, da dies Rechenleistung in der Zentraleinheit 3 erfordern würde und somit den Entwicklungs- und Hardwareaufwand im Schnittstellenkonverter SK erheblich vergrößern würde. Ein weiterer Vorteil des Verfahrens ist, daß die über die ungesicherten isochronen Kanäle übertragenen Daten durch geeignete Verfahren im Rechnersystem (Host) gesichert werden können (z.B. Soft-HDLC). Eine doppelte Sicherung wird vermieden.

Demgegenüber werden die Daten des Signalisierungskanals D nicht in einem ungesicherten Kanal IsoP, sondern im gesicherten Steuerkanal CP unter Ausnützung des dort vorhanden Vendor-Bereichs übertragen. Im Steuerkanal (default control pipe) der zweiten (USB-) Schnittstelle S2 ist ferner zusätzlich zum Standardbereich ein sogenannter Vendor-Bereich freigehalten, den das jeweilige Peripheriegerät nach Bedarf verwenden kann. Da der Steuerkanal CP einen zwar langsamen, jedoch gesicherten Übertragungskanal darstellt, werden in diesem frei verfügbaren Vendor-Bereich gemäß der vorliegenden Erfindung die Daten des Signalisierungskanals D der ersten Schnittstelle S1, Register-Interface Daten, sowie Steuermeldungen für die erste Schnittstellensteuerung 1 übertragen.

Die im Steuerkanal CP übertragenen sogenannten "D-Kanaldaten" besitzen hierbei ebenfalls eine Datenrate von 16 Kilobit pro Sekunde, wobei die zusätzlich im Vendor-Bereich übertragenen Steuer-Kommandos bzw. Meldungen im wesentlichen die Statusänderungen in der ersten Schnittstelle S1 enthalten. Mit diesen Befehlen (z.B. Command Indication (CI)-Befehle) können beispielsweise der D-Kanal sowie die B1, B2-Kanäle geöffnet und geschlossen werden. Das im Vendor-Bereich enthaltene Register-Interface kann zur Korrektur von fehlerhaften Parametrierungen der ersten Schnittstellensteuerung 1 verwendet werden, wie sie beispielsweise bei fehlerhafter Kompatibilität der Schnittstellensteuerung 1 zur ersten Schnittstelle S1 auftreten kann. Dieser Fall kann auftreten, wenn Schnittstellensteuerungen unterschiedlicher Hersteller an der gleichen ersten Schnittstelle S1 verwendet werden. Eine derartige Inkompatibilität und folglich Fehlfunktion der ersten Schnittstelle S1 kann über das Register-Interface einfach vom Rechnersystem behoben werden.

Daher ist der Schaltungsaufwand und die Entwicklung von Steuerprogrammen für den Schnittstellenkonverter SK minimal, da alle komplexen Steuerungen auf das Rechnersystem ausgelagert werden. So erfolgt beispielsweise eine Fehlerbehandlung von Nutzkanaldaten nicht im Schnittstellenkonverter SK, sondern im Rechnersystem. Die ungesicherte transparente Übertragung der Daten der Nutzkanäle B1 und B2 in den isochronen Kanälen IsoP₁-IsoPₙ-, ist hierbei kein Nachteil, da die Datensicherung wie im digitalen leitungsvermittelten Netz nunmehr vom Rechnersystem realisiert werden kann. Demgegenüber werden die für die erste Schnittstelle S1 sensitiven Daten im Signalisierungskanal des Signalisierungskanals D im gesicherten Steuerkanal CP der zweiten Schnittstelle S2 übertragen. In diesem Fall kann bereits im Schnittstellenkonverter SK der Signalisierungskanal D über ein HDLC Protokoll gesichert werden, wodurch diese Sicherung im Rechnersystem entfällt. Andererseits wird im Schnittstellenkonverter SK bewußt keine Fehlerkorrektur der Nutzkanäle B1 und B2 durch eine HDLC-Steuereinheit durchgeführt, sondern erst an späterer Stelle im Rechnersystem abgearbeitet. Dies führt zu einer besonders kostengünstigen Lösung.

Zur weiteren Vereinfachung des Schnittstellenkonverters SK kann in der zweiten Schnittstelle S2 ein Ereigniskanal IP (interupt pipe) geschaltet bzw. erzeugt werden, in dem bestimmte Ereignisse gemeldet werden. Bei diesen Ereignissen handelt es sich um Ereignisse der ersten Schnittstelle S1 sowie insbesondere um "ackknowledge"-Meldungen im Steuerkanal (Zustandsänderung an der ersten Schnittstelle S1, Leitungszustand, usw.). Auf diese Weise können insbesondere Statusänderungen der ersten Schnittstelle S1 erkannt und unmittelbar bzw. asynchron an das Rechnersystem weitergegeben werden, um eine bestimmte Aktion zu veranlassen. Auf diese Weise läßt sich folglich weiter Logik bzw. Rechenleistung aus dem Schnittstellenkonverter SK in das Rechnersystem auslagern, wodurch sich eine weitere Vereinfachung des Schnittstellenkonverters SK ergibt.

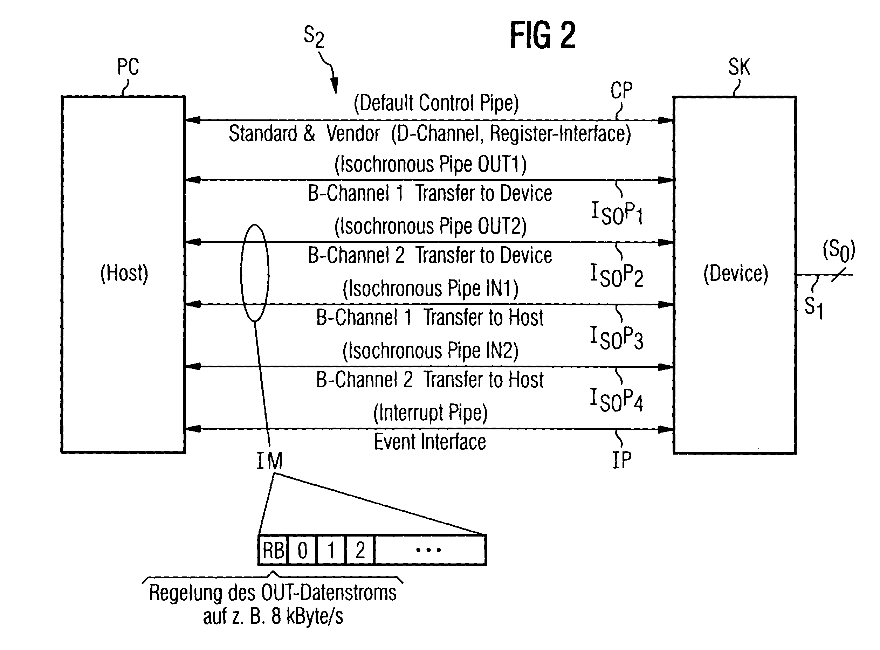

Die Fig. 2 zeigt eine schematische Darstellung eines Gesamtsystems mit dem Schnittstellenkonverter SK gemäß Fig. 1 und einem Rechnersystem PC. Der Schnittstellenkonverter SK ist als ISDN-Peripheriegerät über eine USB-Schnittstelle S2 mit sechs virtuellen Kanälen an das Rechnersystem angeschaltet und über die S₀-Schnittstelle beispielsweise mit einer privaten oder öffentlichen Vermittlungsanlage verbunden. Wie bereits anhand von Fig. 1 beschrieben wurde, ist der Steuerkanal CP ein bidirektionaler Datenkanal, der einen Standard-Bereich und einen Vendor-Bereich für D-Kanaldaten, das Register-Interface und die Steuer-Meldungen/Kommandos aufweist. Die isochronen Kanäle IsoP₁-IsoP₂ übertragen Daten der Nutzkanäle B1 und B2 vom Rechnersystem PC zum Schnittstellenkonverter SK. In gleicher Weise übertragen die isochronen Kanäle IsoP₃ und IsoP₄ die Daten der Nutzkanäle B1 und B2 in umgekehrter Richtung vom Schnittstellenkonverter SK zum Rechnersystem PC. Der Ereigniskanal IP führt vom Schnittstellenkonverter SK zum Rechnersystem PC und meldet in dieser Richtung spezifische Ereignisse bezüglich des Steuerkanals CP und der ersten Schnittstelle S1.

Da die erste Schnittstelle S1 nicht synchron zur zweiten Schnittstelle S2 sein muß, bzw. bei der USB-Schnittstelle sogar vorgesehen ist, daß die Taktrate der USB-Schnittstelle auf Anforderung eines Peripheriegerätes geändert wird, besitzt der erfindungsgemäße Schnittstellenkonverter SK die Möglichkeit zum Ausgleichen derartiger Taktverschiebungen bzw. Änderungen der Taktraten auf den jeweiligen Schnittstellen S1 und S2. Die Bandbreite in den isochronen Kanälen IsoP zur Übertragung der Daten auf der USB-Schnittstelle S2 muß daher größer sein als die Bandbreite der zugehörigen Nutzkanäle B1 und B2 in der S₀-Schnittstelle. Darüber hinaus besitzt der Schnittstellenkonverter SK die Möglichkeit den vom Rechnersystem PC auf den isochronen Kanälen IsoP₁ und IsoP₂ gelieferten Datenstrom zu steuern bzw. zu regeln.

Gemäß Fig. 1 besitzt der Schnittstellenkonverter SK einen Schwellwertentscheider 7 und eine Regelungsvorrichtung 6. Der Schwellwertentscheider 7 stellt hierbei fest, ob im Pufferspeicher 5 eine maximale oder minimale Anzahl von abgespeicherten bzw. zu konvertierenden Daten über- oder unterschritten wurde. Bei Über- oder Unterschreiten dieser maximalen oder minimalen Anzahl von abgespeicherten Daten wird dies an die Regelvorrichtung 6 weitergeleitet, die ihrerseits ein Regelbyte RB im ausgehenden Datenstrom der isochronen Kanäle IsoP₃ und IsoP₄ verändert. Wie in Fig. 2 dargestellt ist, befindet sich nämlich im Datenstrom der isochronen Kanäle IsoP₃ und IsoP₄ zusätzlich zu den zu übertragenden Daten das Regelbyte RB, welches im Normalfall den Wert 7 bis 9 aufweist. Damit werden Asynchronitäten zwischen den Schnittstellen S1 und S2 ausgeglichen.

Stellt jedoch der Schwellwertentscheider 7 ein Abweichen aus dem vorbestimmten Bereich für die abgespeicherten Daten fest, so wird dies an die Regelvorrichtung 6 signalisiert, die wiederum das Regelbyte RB in den ausgehenden isochronen Kanälen IsoP₃ und IsoP₄ entsprechend verringert oder vergrößert. Dieses Regelbyte RB wird anschließend vom Rechnersystem PC ausgewertet und die vom Rechnersystem auf den isochronen Kanälen IsoP₁ und IsoP₂ ausgesendete Datenmenge entsprechend verändert. Dadurch kann bei minimalen Speicherplatzbedarf in zuverlässiger Weise ein Überlaufen des Pufferspeichers 5 verhindert werden und darüber hinaus eine Angleichung der asynchronen Schnittstellen S1 und S2 erfolgen. In gleicher Weise kann auch eine in der USB-Spezifikation vorgesehene Änderung der Taktrate ausgeglichen werden, bei der von einem externen Peripheriegerät eine grundsätzliche Taktänderung der USB-Schnittstelle angefordert wird. Die Größe des Pufferspeichers 5 kann dadurch gering gehalten werden.

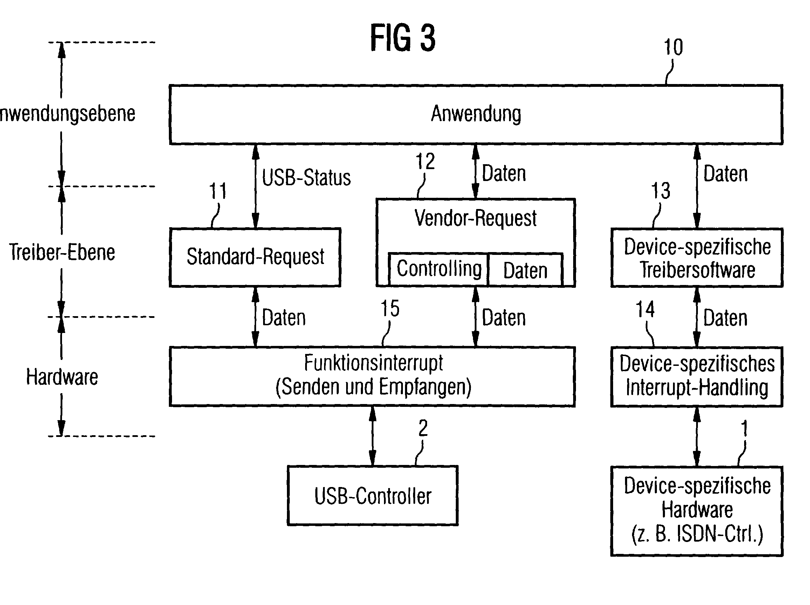

Fig. 3 zeigt den Aufbau von Funktionsblöcken im Schnittstellenkonverter SK. Die Funktionsblöcke im Schnittstellenkonverter liegen hierbei im wesentlichen in drei Schichten. Die oberste Schicht zeigt einen Funktionsblock 10, der eine sehr einfach gehaltene Anwendung darstellt, die beispielsweise die erste Schnittstellensteuerung 1 initialisiert und gewünschte Funktionen ausführt. Der Funktionsblock 1 bezeichnet die erste Schnittstellensteuerung zum Steuern beispielsweise der S₀-Schnittstelle. Der Funktionsblock 2 bezeichnet die zweite Schnittstellensteuerung zum Steuern der USB-Schnittstelle.

Wie bereits anhand von Fig. 1 beschrieben wurde, befindet sich am Ende jedes virtuellen Kanals im Schnittstellenkonverter ein sogenannter Endpoint (siehe Seite 13) mit dem zugehörigen Sende- und Empfangs-FIFO. Wenn ein Empfangs-FIFO gefüllt wurde oder ein Sende-FIFO leer ist, wird ein Interupt ausgelöst. Dieser kann die Sende-FIFOs wieder füllen oder kopiert die empfangenen Daten aus dem FIFO 8 in den Pufferspeicher 5, der der Treiberschicht zur Verfügung gestellt wird. In gleicher Weise werden auch die Daten der ersten Schnittstellensteuerung 1 im FIFO 9 behandelt.

Die Treiberschicht besteht wiederum aus zwei Funktionsblöcken, einem Funktionsblock 11, der die "Standard-Requests" im Steuerkanal CP abhandelt, und einem Funktionsblock 12, der die "Vendor-Requests" im Steuerkanal CP der USB-Schnittstelle abhandelt. Alle USB-Standardfunktionen werden im Funktionsblock 11 abgearbeitet. Dieser erwartet, daß alle an ihn gerichteten Anfragen über den Steuerkanal CP übertragen werden. In diesem Funktionsblock 11 wird die gesamte "Enummeration" und Konfiguration ausgeführt. Während des Betriebes können noch Statusabtragen gemacht werden oder das USB-System umkonfiguriert werden. Demgegenüber werden alle herstellerspezifischen "Requests" bzw. Funktionen im Funktionsblock 12 abgearbeitet. Er führt die gewünschten Befehle entweder selber aus, oder übergibt die empfangen Daten der Anwendungsschicht, damit diese sie abarbeitet. Der Funktionsblock 13 dient der speziellen Ansteuerung der S₀-Schnittstelle, während die Funktionsblöcke 14 und 15 bestimmte Ereignisse bzw. Interupts an den jeweiligen Schnittstellen abarbeiten. Die Auswirkungen der Funktionsblöcke auf die virtuellen Kanäle werden abschließend anhand von Fig. 2 beschrieben.

Gemäß Fig. 2 besitzt der Schnittstellenkonverter SK sechs virtuelle Kanäle, die in der USB-Spezifikation auch als endpoints 0 bis 5 bezeichnet werden. Zur Übertragung von Kontroll- und D-Kanalinformationen stehen der Steuerkanal CP (endpoint 0) und der Ereigniskanal IP (endpoint 5) zur Verfügung. Wie bereits beschrieben wurde, werden mit dem Steuerkanal CP D-Kanaldaten vom und zum Schnittstellenkonverter SK übertragen. Darüber hinaus werden verschiedenste Steuerinformationen übertragen (z.B. Setzen eines CI-Registers). Der Ereigniskanal IP ermöglicht die Übertragung von asynchronen Ereignissen zum Rechnersystem. Es werden Ereignisse wie Änderungen eines CI-Registers und der Abschluß verschiedenster Operationen gemeldet. Zur Übertragung der B-Kanaldaten stehen die isochronen Kanäle (endpoint 1 bis 4) zur Verfügung, wobei zusätzlich in diesen Kanälen eine Schlußkontrolle realisiert wird. Das jeweils erste Byte eines Pufferspeichers in den ausgehenden isochronen Kanälen IsoP₃ und IsoP₄ wird als Regelbyte RB zur Steuerung der Länge von Pufferspeichern in den vom Rechnersystem PC eingehenden isochronen Kanälen IsoP₁ und IsoP₂ genutzt. Im Gegensatz zum Steuerungs-, Ereignis- oder (nicht beschriebenen) Bulk-Kanal muß der isochrone Kanal immer mit Daten versorgt werden, damit der Datenstrom nicht abreißt. Reißt der Datenstrom dennoch ab, so meldet ein nicht dargestelltes USB-Treiber-Stack im Rechnersystem (Host) bei weiteren USB-Operationen auf dem jeweiligen isochronen Kanal IsoP Fehler. In diesem Fall muß der Kanal zurückgesetzt werden.

Das vorstehend beschriebene Ausführungsbeispiel betrifft einen Schnittstellenkonverter zum Anpassen einer ISDN-S₀-Schnittstelle an eine USB-Schnittstelle, ist jedoch nicht darauf beschränkt, sondern umfaßt vielmehr alle Vorrichtungen und Verfahren zum Konvertieren von Datenformaten zwischen einer Schnittstelle für serielle Bussysteme mit virtuellen Kanälen und einer Schnittstelle für digitale leitungsvermittelte Netze. Insbesondere kann anstelle der S₀-Schnittstelle eine U_{P0}-Schnittstelle oder sonstige Schnittstelle im ISDN verwendet werden. Weiterhin können auch Breitband-ISDN oder vergleichbare digitale Telekommunikationsnetze an ein serielles Bussystem mit virtuellen Kanälen angepaßt werden. In gleicher Weise kann anstelle der USB-Schnittstelle eine FireWire-Schnittstelle oder eine vergleichbare Schnittstelle verwendet werden.

Im vorstehend beschriebenen Ausführungsbeispiel werden die D-Kanal-Daten im Steuerkanal der USB-Schnittstelle übertragen, sie können jedoch auch in einem anderen gesicherten Kanal (z.B. Interrupt pipe) übertragen werden.

## Patentansprüche

1. Vorrichtung zum Konvertieren von Datenformaten zwischen einer ersten Schnittstelle (S1) für digitale leitungsvermittelte Netze und einer zweiten Schnittstelle (S2) für serielle Bussysteme mit virtuellen Kanälen, wobei
eine erste Schnittstellensteuerung (1) einen Datenzugang auf einen Signalisierungskanal (D) sowie zumindest einen Nutzkanal (B1, B2) der ersten Schnittstelle (S1) steuert, und wobei eine zweite Schnittstellensteuerung (2) einen Datenzugang auf einen gesicherten Kanal (CP) und zumindest zwei ungesicherte Kanäle (IsoP₁ - IsoPₙ) der zweiten Schnittstelle (S2) steuert,
**gekennzeichnet durch**
eine Zuordnungsvorrichtung (3, 4, 5) zum gegenseitigen Zuordnen von
im Signalisierungskanal (D) und im gesicherten Kanal (CP) sowie
in dem zumindest einen Nutzkanal (B1, B2) und in den zumindest zwei ungesicherten Kanälen (IsoP₁ - IsoPₙ) übertragenen Daten.

2. Vorrichtung nach Patentanspruch 1, **dadurch gekennzeichnet,** daß der gesicherte Kanal ein Steuerkanal (CP) und die ungesicherten Kanäle isochrone Kanäle (IsoP₁ - IsoPₙ) sind.

3. Vorrichtung nach Patentanspruch 1 oder 2, **dadurch gekennzeichnet,** daß die zweite Schnittstellensteuerung (2) ferner einen Datenzugang auf einen Ereignis-Kanal (IP) steuert, wodurch bestimmte den gesicherten Kanal (CP) betreffende Ereignisse gemeldet werden können.

4. Vorrichtung nach Patentanspruch 2 oder 3, **dadurch gekennzeichnet,** daß der Steuerkanal (CP) der zweiten Schnittstelle (S2) ein bidirektionaler Kanal mit geringer Datenübertragungsrate ist.

5. Vorrichtung nach Patentanspruch 2, 3 oder 4, **dadurch gekennzeichnet,** daß die zumindest zwei isochronen Kanäle (IsoP₁ - IsoPₙ) der zweiten Schnittstelle (S2) unidirektionale Kanäle mit hoher Datenübertragungsrate sind.

6. Vorrichtung nach Patentanspruch 5, **dadurch gekennzeichnet,** daß die zumindest zwei unidirektionalen Kanäle zumindest einen OUT-Kanal (IsoP₁, IsoP₂) zum Übertragen von Daten zur zweiten Schnittstellensteuerung (2) und zumindest einen IN-Kanal (IsoP₃, IsoP₄) zum Übertragen von Daten aus der zweiten Schnittstellensteuerung (2) aufweisen, wobei ein im IN-Kanal übertragener Datenstrom ein Regelbyte (RB) zum Regeln der im QUT-Kanal übertragenen Datenmenge besitzt.

7. Vorrichtung nach Patentanspruch 6, **dadurch gekennzeichnet,** daß die Zuordnungsvorrichtung einen Pufferspeicher (5) zum wechselseitigen Auslesen/Abspeichern von zu konvertierenden Daten aus der ersten und zweiten Schnittstellensteuerung (1, 2) aufweist, wobei ein Schwellwertentscheider (7) feststellt, ob eine maximale oder minimale Anzahl von im Pufferspeicher (5) abgespeicherter Daten über- oder unterschritten ist und bei Über- oder Unterschreiten dieser Anzahl das Regelbyte (RB) im IN-Kanal entsprechend verändert.

8. Vorrichtung nach einem der Patentansprüche 1 bis 7, **dadurch gekennzeichnet,** daß der gesicherte Kanal (CP) der zweiten Schnittstelle (S2) ferner Steuerinformationen für die erste Schnittstellensteuerung (1) überträgt.

9. Vorrichtung nach einem der Patentansprüche 1 bis 8, **dadurch gekennzeichnet,** daß die Bandbreite der zumindest zwei ungesicherten Kanäle jeweils größer ist als die Bandbreite der zugeordneten Nutzkanäle (B1, B2).

10. Vorrichtung nach einem der Patentansprüche 1 bis 9, **dadurch gekennzeichnet,** daß die erste Schnittstelle (S1) eine ISDN-S₀-Schnittstelle und die zweite Schnittstelle (S2) eine USB-Schnittstelle ist.

11. Verfahren zum Konvertieren von Datenformaten zwischen einer ersten Schnittstelle (S1) für digitale leitungsvermittelte Netze und einer zweiten Schnittstelle (S2) für serielle Bussysteme mit virtuellen Kanälen, wobei die erste Schnittstelle einen Signalisierungskanal (D) sowie zumindest einen Nutzkanal (B1, B2) und die zweite Schnittstelle (S2) einen gesicherten Kanal (CP) aufweist, mit den Schritten:
Erzeugen von zumindest zwei ungesicherten Kanälen (IsoP₁ - IsoPₙ) in der zweiten Schnittstelle (S2), und gegenseitiges Zuordnen von
im Signalisierungkanal (D) und im gesicherten Kanal (CP) sowie
in dem zumindest einen Nutzkanal (B1, B2) und in den zumindest zwei ungesicherten Kanälen (IsoP₁ - IsoPₙ) übertragenen Daten.

12. Verfahren nach Patentanspruch 11 mit dem weiteren Schritt:
Erzeugen eines Ereignis-Kanals (IP) in der zweiten Schnittstelle (S2), wodurch bestimmte den gesicherten Kanal (CP) betreffende Ereignisse gemeldet werden können.

13. Verfahren nach Patentanspruch 11 oder 12, **dadurch gekennzeichnet,** daß die im gesicherten Kanal (CP) der zweiten Schnittstelle (S2) übertragenen Daten mit geringer Datenübertragungsrate bidirektional übertragen werden.

14. Verfahren nach Patentanspruch 11, 12 oder 13, **dadurch gekennzeichnet,** daß die in den ungesicherten Kanälen der zweiten Schnittstelle (S2) übertragenen Daten mit hoher Datenübertragungrate unidirektional übertragen werden.

15. Verfahren nach Patentanspruch 14, **dadurch gekennzeichnet, daß** einem ausgesendeten Datenstrom in einem (IsoP₃, IsoP₄) der zumindest zwei ungesicherten Kanäle ein Regelbyte (RB) eingefügt wird, das die Datenmenge auf dem anderen (IsoP₁, IsoP₂) der zumindest zwei ungesicherten Kanäle regelt.
